Europäisches Patentamt

European Patent Office

Office européen des brevets

(11) Publication number: **0 104 952**
**B1**

(12) **EUROPEAN PATENT SPECIFICATION**

(45) Date of publication of patent specification: **06.08.86**

(21) Application number: **83305833.2**

(22) Date of filing: **28.09.83**

(51) Int. Cl.⁴: **G 21 F 9/02**

(54) **Apparatus for cleaning a gaz.**

(30) Priority: **28.09.82 JP 170199/82**

(43) Date of publication of application:
**04.04.84 Bulletin 84/14**

(45) Publication of the grant of the patent:
**06.08.86 Bulletin 86/32**

(84) Designated Contracting States:
**BE DE FR GB**

(56) References cited:
**FR-A-1 324 386**
**FR-A-2 179 737**
**FR-A-2 338 734**
**FR-A-2 413 925**

(73) Proprietor: **KABUSHIKI KAISHA KOBE SEIKO
SHO**
**3-18 1-chome, Wakinohama-cho Chuo-ku
Kobe 651 (JP)**

(72) Inventor: **Komatsu, Fumiaki**
**18-21 Aza-inokorobi Shomotanigami
Yamada-cho Kita-ku Kobe (JP)**
Inventor: **Hirano, Seiichi**
**9-1 Shioyadai 3-chome
Tarumi-ku Kobe (JP)**
Inventor: **Tanabe, Hiromi**
**1 Yamada-cho Uegahara
Nishinomiya Hyogo-ken (JP)**

(74) Representative: **Wright, Hugh Ronald et al
Brookes & Martin 52/54 High Holborn
London WC1V 6SE (GB)**

Courier Press, Leamington Spa, England.

**Description**

This invention relates to an apparatus for cleaning a gas such as a dust collector for radioactive particles and other dust particles in general from a gas.

Radioactive materials handling facilities are often provided with equipment for handling powder particles having radioactive materials mixed therein, where negative pressure control is used by employing a suction system using a blower or the like to maintain a negative pressure in the system inside the equipment. With the use of such negative pressure control the powder particles containing radioactive materials are usually carried by the air current. Where a thermal process such as melting or sintering is employed to compact or to reduce the volume of non-flammable powder particles such as incineration ashes containing radioactive materials, large quantities of incineration ash, gases and a thermal decomposition product called a fume collect in the off-gas system and it becomes necessary to remove these substances.

Generally, when using said negative pressure control, in order to clean the exhaust air current and remove these powder particles, use is made of a high performance filter called the HEPA filter. The HEPA filter, though high in performance, is liable to be clogged with the powder particles collected and is therefore used primarily on a throwaway basis. A more economical arrangement would therefore be to provide a filter of large collection capacity at the stage preceding the HEPA filter. One might think to use a bag filter as this pre-stage filter, but generally a bag filter has a small filtration area, so that a large bag filter would have to be used. This increases the danger of radioactive powder particles flying away and makes exchange of the bag difficult.

Further, in collecting general air-borne dust, if the amount of dust is large it is desirable to continuously discharge the collected dust separately from the removal of the filter. In that case, it is desirable for the exchange of filters to take place in a sealed space (see for example French patent specification FR—A—2 413 925).

The present invention provides apparatus for cleaning a gas comprising a housing divided into upper and lower chambers by a partition plate, the upper chamber being formed with a discharge port for cleaned gas and a filter supply port, the lower chamber being formed with an inlet port for a gas to be cleaned and a filter discharge port and a filter holder being arranged to enable a filter to be installed from above and to be withdrawn downward, characterised in that a plurality of filter holders being disposed in a circle within the housing and extending through said partition plate, a back-washing nozzle is rotatably installed above said filters for removing powdered dust particles from said filters, and means is provided for continuously discharging the collected dust.

Preferably, the filter discharge port is formed in the lower portion of the lower chamber and has connected thereto a filter removal port.

A preferred embodiment of the invention will now be described by way of example only and with reference to the accompanying drawings in which:

Figure 1 is a vertical sectional view showing a preferred embodiment of this invention;

Figures 2 and 3 are sectional views taken along the lines II—II and III—III in Figure 1, respectively;

Figure 4 is an enlarged view of a portion of Figure 1 indicated by arrow IV; and

Figure 5(a) through (n) shows the steps of exchanging filters.

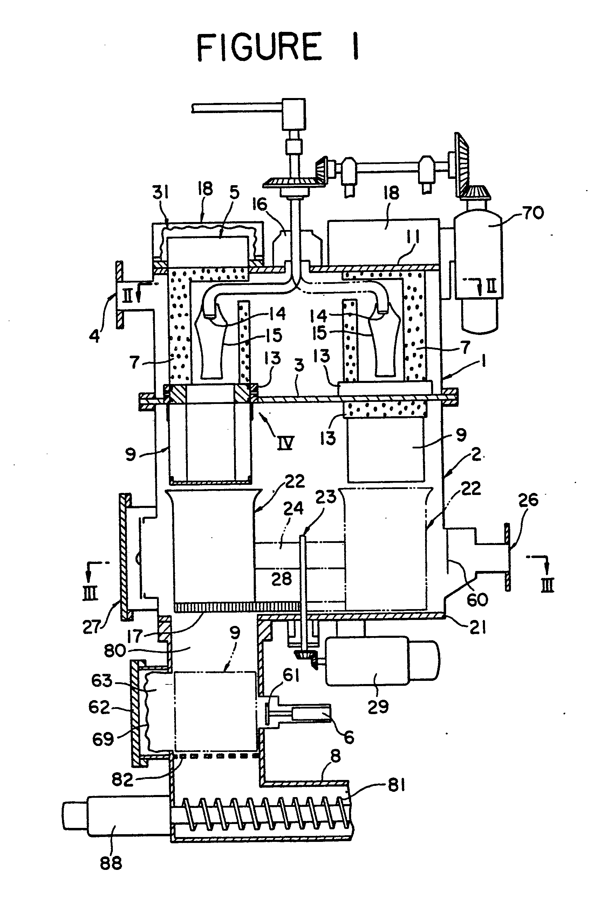

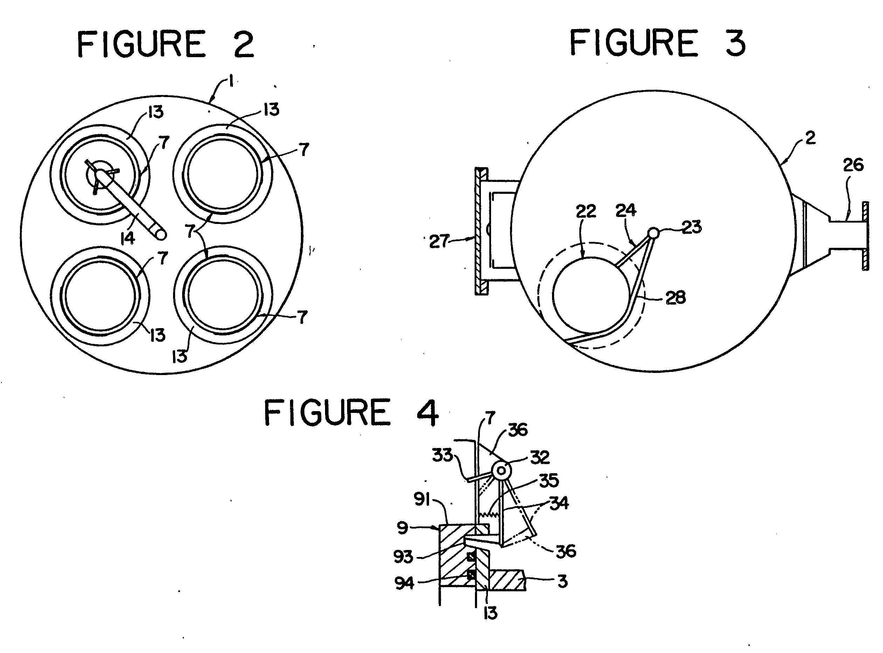

An embodiment of this invention will now be described with reference to the drawings. In Figures 1 to 4, the housing of the apparatus is composed of an upper chamber 1 and a lower chamber 2, the upper and lower chambers 1 and 2 being interconnected, with a partition plate 3, which divides the inner space, being disposed therebetween. The upper chamber 1 is formed with a discharge port 4 and a filter supply port 5, while the lower chamber 2 is formed with an inlet port 26 for a gas to be treated and a filter discharge port 17. The filter supply port 5 will be sealed by a vinyl bag 31 if a radioactive material is present. This vinyl bag is not necessary in ordinary cases, but even in ordinary cases if a poisonous material is treated, said bag may be installed according to the need.

The partition plate 3 is formed with a holder 13 for a filter 9, and a cylindrical guide plate 7 is disposed between the holder and the filter supply port 5. The guide plate 7 is made of perforated plate and notched to allow passage of a back-washing nozzle 14. In the illustration, such guide plates 7 and holders 13 are disposed, four each, in a circle. The nozzle 14 is rotatably supported in a bearing 16 installed on an upper plate 11 and is rotatively driven by a motor 70. The filter 9 is cylindrically formed of a nonwoven fabric of an organic fibre such as cotton, nylon, teflon, acrylic, or Pylen, or of an inorganic fibre such as asbestos, glass, or metal, and is pleated to increase the filtration area. Since the filter which is being used becomes clogged during filtration of powder particles, installed within the filter 9 is the back-washing nozzle 14 for blowing air pulses at regular intervals of time to drive out powder particles into the filter, and a venturi 15 for efficient introduction of the air from the back-washing nozzle 14 into the filter; thus back-washing is made possible.

A shaft 32 is rotatably attached to the lower portion of each guide plate 7 by a rib 36, said shaft 32 having actuator rods 33 and 34 attached thereto. The actuator rod 34 is urged to turn clockwise by a spring 35, so that an actuator element 36 attached to the front end of the actuator rod 34 is passed through a hole formed in the holder 13 until its front end engages a recess 93 formed in the flange 91 of the filter 9. This prevents the filter 9 accidentally falling.

Further, a packing 94 is disposed between the outer peripheral surface of the flange 91 and the inner peripheral surface of the holder 13 to seal the clearance between the upper and lower chambers 1 and 2.

A rotary guide 22 is disposed in the lower chamber 2 and is held by a central shaft 23 extending through a bottom plate 21 by means of an arm 24. The central shaft 23 is rotated by a motor 29, whereby the rotary guide 22 is moved so as to be positioned below a filter 9 located at any desired position, and the filter fed thereinto can be carried to the filter discharge port 17. Further, a radially extending scraper 28 is fixed on the central shaft 23, whereby powder particles that have fallen onto the bottom plate 21 are gathered and fed into the filter discharge port 17.

The filter discharge port 17 is sealed by a vinyl bag (not shown) and may have a receiver vessel (not shown) attached to the outer side thereof. In this case, after the filter has been dropped into the vinyl bag, the latter is thermally cut to seal the vinyl bag, the latter is thermally cut to seal the bag so that the filter may be safely discarded. When it is desired to carry out this operation continuously, the construction shown in Figure 1 may be used. That is, the filter discharge port 17 communicates with a discharge chamber 80 which is laterally formed with a filter removal port 63 and is connected at its lower end to a take-off chamber 8. The discharge chamber 80 is provided with a floor 82 formed of a perforated plate and with a pusher 6 at its side, so that the filter in the vinyl bag that has fallen down on the floor 82 is pushed out into the filter removal port 63 by the rod 61 of the pusher 6. Disposed in the take-off chamber 8 is a screw 81 rotated by a motor 88. A vinyl bag 69 will be attached to the filter removal port 63, according to the need. The numeral 27 denotes an inspectiion port and 60 denotes a baffle plate.

The operation of the aforesaid apparatus will now be described. When a gas to be treated is fed into the lower chamber 2 through the inlet port 26, it passes through the filters 9, whereby dust such as particles of radioactive material is removed from the gas. The gas thus cleaned is fed into the upper chamber 1 and taken out through the discharge port 4. To replace one used filter 9 by a new filter, the latter is lowered from above which pushes the actuator rod 33, thereby rotating the shaft 32 counterclockwise to release the actuator element 36 from the recess 93. Further pushing down of the new filter results in the used filter 9 being dropped into the rotary guide 22. The new filter is further lowered until it is positioned on the inner peripheral surface of the holder 13, whereupon the actuator rod 34 is pulled by the force of the spring 35 to cause the actuator element 36 to fit in the recess 93, whereby the new filter is held in position.

The filter 9 dropped into the rotary guide 22 is conveyed by the rotation of the central shaft 23 until it is positioned above the filter discharge port 17, whereupon it falls onto the floor 82.

Subsequently, the pusher device 6 is actuated and the rod 61 pushes out the filter 9 into the filter removal port 63. The aforesaid operation is performed successively on the four circumferentially arranged filters.

The dust driven out of the filters by backwashing is continuously fed into the take-off chamber 8 through the floor 82 and then it is continuously taken off by the screw 81. Thus, even in the case where the amount of dust is very large, there is no trouble, and since most of the dust has been removed, the operation of taking out the filter is performed with ease.

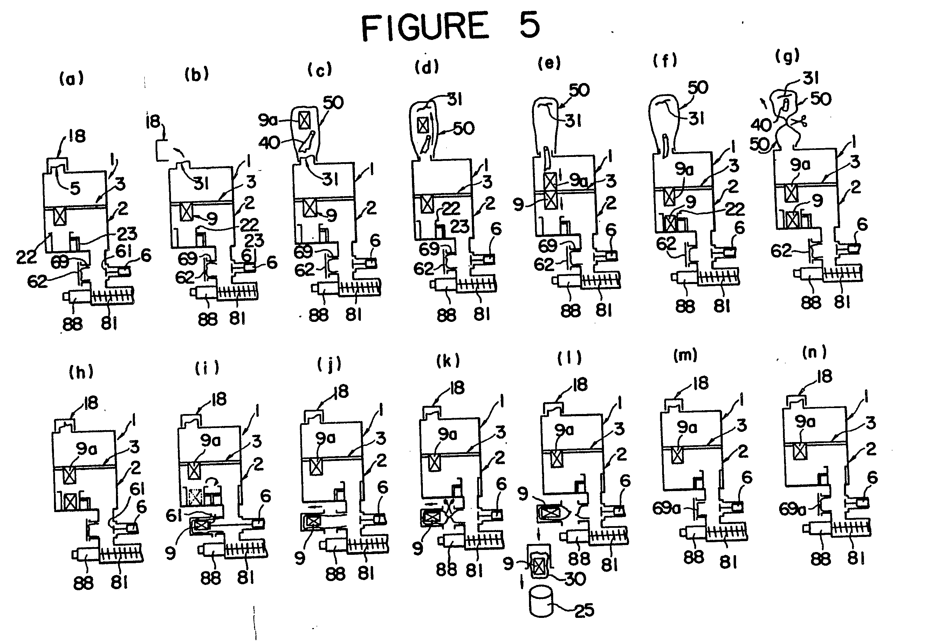

If the dust contains radioactive materials, to prevent it from flying away, the operation may be performed by the method shown in Figure 5. First, as shown in Figure 5(a) and (b), the cover 18 is removed and the filter supply port 5 is covered with a vinyl bag 50. The vinyl bag 50 has a new filter 9a put therein in advance. The vinyl bag 50 has attached thereto a glove 40, by means of which the vinyl bag sealing the filter supply port 5 is removed and put into the vinyl bag 50, as shown in Figure 5(c) and (d). Then, as shown in Figure 5(e) and (f), the new filter 9a is lowered which causes the used filter 9 to drop into the rotary guide 22, and the new filter 9a is set in position.

Subsequently, as shown in Figure 5(g) and (h), the vinyl bag 50 is thermally cut to enclose the vinyl bag 31 and glove 40, and after removal of same, the cover 18 is placed in position. Then, the rotary guide 22 is moved to be positioned above the filter discharge port 17. As shown in Figure 5(i), (j) and (k), the used filter 9 which has dropped onto the floor 82 is pushed out into the filter removal port 63 by the rod 61, so that the filter 9 is received in the vinyl bag 69 sealing the filter removal port 63, whereupon the vinyl bag 69 is thermally cut. The receiver vessel 25 is carried to a predetermined location and the vinyl bag 69 containing the filter 9 is discarded, whereupon a new vinyl bag 69a is placed on the filter removal port 63 and the cover 62 is placed in position, as shown in Figure 5(l), (m) and (n). In addition, in this case, the remainder of the old vinyl bag 69 left after thermal cutting is placed in the new vinyl bag 69a, but this process is not illustrated.

In this manner, with the filter supply port 5 and filter removal port 63 sealed by the vinyl bags 18 and 69, respectively, exchange of the filters 9 is effected. Further, during exchange, direct communication between the upper and lower chambers 1 and 2 at the holder 13 is cut off, so that there is no danger of the radioactive materials flying away during exchange of the filters 9 and the exchange operation can be easily carried out. In addition, where the apparatus is used as a common dust collector, the vinyl bags are unnecessary.

The partition plate dividing the interior of the housing into upper and lower chambers is provided with filter holders so that exchange of filters can be effected while keeping the housing interior in a sealed state; the dust is continuously taken out and exchange of filters can be effected while preventing dust from flying away.

## Claims

1. Apparatus for cleaning a gas comprising a housing divided into upper and lower chambers (1 and 2) by a partition plate (3), the upper chamber (1) being formed with a discharge port (4) for cleaned gas and a filter supply port (5), the lower chamber (2) being formed with an inlet port (26) for a gas to be cleaned and a filter discharge port (17) and a filter holder (13) being arranged to enable a filter (9) to be installed from above and to be withdrawn downward, characterised in that a plurality of filter holders (13) is disposed in a circle within the housing, each extending through said partition plate (3), a back-washing nozzle (14) is rotatably installed above said filters for removing powdered dust particles from said filters, and means (8) is provided for continuously discharging the collected dust.

2. Apparatus for cleaning a gas as claimed in claim 1 characterised in that the filter discharge port (17) formed in the lower portion of the lower chamber (2) has connected thereto a filter removal port (63).

## Patentansprüche

1. Vorrichtung zum Gasfiltrieren mit einem Gehäuse, das durch eine Trennwand (3) in eine obere und eine untere Kammer (1 und 2) geteilt ist, wobei die obere Kammer (1) mit einer Ausströmöffnung (4) für das gereinigte Gas sowie einer Filterzuführöffnung (5) ausgebildet ist, die untere Kammer (2) mit einer Einlaßöffnung (26) für ein zu reinigendes Gas und einer Filterabführöffnung (17) ausgebildet ist und ein Filterhalter (13) so angeordnet ist, daß ein Filter (9) von oben zugeführt und nach unten abgeführt werden kann, dadurch gekennzeichnet, daß eine Vielzahl von Filterhaltern (13) innerhalb des Gehäuses in einem Kreis angeordnet ist, von denen jeder durch die Trennwand (3) hindurch verläuft, daß eine Nachreinigungsdüse (14) drehbar oberhalb der Filter angebracht ist, um pulverisierte Staubpartikel von den Filtern zu entfernen, und daß ein Mittel (8) vorgesehen ist, um den gesammelten Staub ununterbrochen absuführen.

2. Vorrichtung zum Gasfiltrieren nach Anspruch 1, dadurch gekennzeichnet, daß an die Filterabführöffnung (17), die in dem unteren Bereich der unteren Kammer (2) ausgebildet ist, eine Filterentnahmeöffnung (63) angeschlossen ist.

## Revendications

1. Dispositif de filtrage de gaz comprenant une enveloppe divisée en des chambres supérieure et inférieure (1 et 2) par une cloison de séparation (3), la chambre supérieure (1) présentant un orifice (4) de décharge de gaz filtré et un orifice d'arrivée de filtre (5), la chambre inférieure (2) présentant un orifice (26) d'admission de gaz brut et un orifice (17) d'extraction de filtre et un porte-filtre (13) étant agencé de façon à permettre de poser un filtre (9) par le haut et de l'extraire par le bas, caractérisé en ce qu'une série de porte-filtres (13) sont disposés en cercle dans l'enveloppe, chacun d'eux traversant ladite cloison de séparation (3), et buse de balayage à contre-courant (14) est montée avec possibilité de rotation au-dessus desdits filtres, et un moyen (8) est prévu pour évacuer en continu les poussières recueillies.

2. Dispositif de filtrage de gaz selon la revendication 1, caractérisé en ce qu'à l'orifice d'extraction du filtre (17) ménagé dans la partie inférieure de la chambre inférieure (2) est relié un orifice d'enlèvement de filtre (63).

# FIGURE 1

FIGURE 3

FIGURE 2

FIGURE 4

# FIGURE 5

(a) (b) (c) (d) (e) (f) (g)

(h) (i) (j) (k) (l) (m) (n)

0 104 952